# EUROPEAN PATENT SPECIFICATION

(11) **EP 0 315 322 B1**
(45) Date of publication and mention of the grant of the patent: **12.01.1994**
(21) Application number: 88309206.6
(22) Date of filing: 03.10.1988
(51) Int. Cl.: B60N 2/46, B60R 13/02

(54) **Vehicle door and armrest**
Kraftfahrzeugtür-Armlehne
Accoudoir pour porte de véhicule automobile

(30) Priority: 05.11.1987 US 117073
(43) Date of publication of application: 10.05.1989
(73) Proprietor: GENERAL MOTORS CORPORATION, Detroit Michigan 48202 (US)
(72) Inventor: Welch, Jeffrey Allen, Troy MI 48084 (US)
(74) Representative: Denton, Michael John

(56) References cited:
- DE-A- 1 962 279
- DE-B- 1 267 116
- FR-A- 2 424 825
- GB-A- 2 070 425
- US-A- 3 387 881

## Description

The invention relates to a vehicle door and more particularly to a vehicle door structure including a collapsible armrest as specified in the preamble of claim 1, for example as disclosed in DE-B-1 267 116.

### Background of the Invention

It is well known in motor vehicles to provide a decorative door trim panel assembly on the inner panel of the door. It is also well known to provide an armrest on the door which projects inwards from the door trim panel to provide a convenient rest for an occupant's arm.

The prior art has recognized that the door trim panel may be comprised of a foam material which collapses and absorbs energy upon imposition of a lateral force thereagainst. The prior art has also recognized that the armrest may be comprised of a foam or honeycomb structure which will yield laterally upon the imposition of a force thereagainst.

### Summary of the Invention

A vehicle door structure according to the present invention is characterised by the features specified in the characterising portion of claim 1.

The present invention provides a new and improved door trim and armrest structure in which the armrest overlies a cavity in the door and is mounted by a yieldable mounting arrangement whereby the imposition of a predetermined level of force against the armrest by the seated occupant causes the armrest to collapse into the cavity so as to reach a generally flush relation with the door trim panel.

According to the invention a vehicle door includes an outer panel and an inner panel attached together and defining a space for mounting a window and window regulator. A door trim assembly mounted on the inner panel includes an energy-absorbing member, preferably of synthetic plastics or other foam material, and a trim panel which overlies the energy-absorbing member and provides a decorative surface. An armrest is mounted to project from the trim panel and overlies a cavity provided in the door trim assembly. The armrest is mounted on the door trim assembly by a yieldable mount which yields upon the imposition of a predetermined level of force against the armrest by the seated occupant so that the armrest is collapsed into the cavity and assumes a substantially flush relationship with the door trim assembly.

### Brief Description of the Drawings

These and other objects, features and advantages of the invention will become apparent upon consideration of the following description of preferred embodiments of the invention, and the appended drawings, in which:
Figure 1 is a side elevational view through a vehicle door showing a door trim assembly and armrest according to the present invention;
Figure 2 is a view similar to Figure 1 but showing a second embodiment of the invention;
Figure 3 is a view similar to Figure 1 but showing a third embodiment of the invention; and
Figure 4 is a view similar to Figure 3 but showing the armrest collapsed into a cavity in the door trim assembly by the imposition of an occupant force thereagainst.

### Description of the Preferred Embodiments

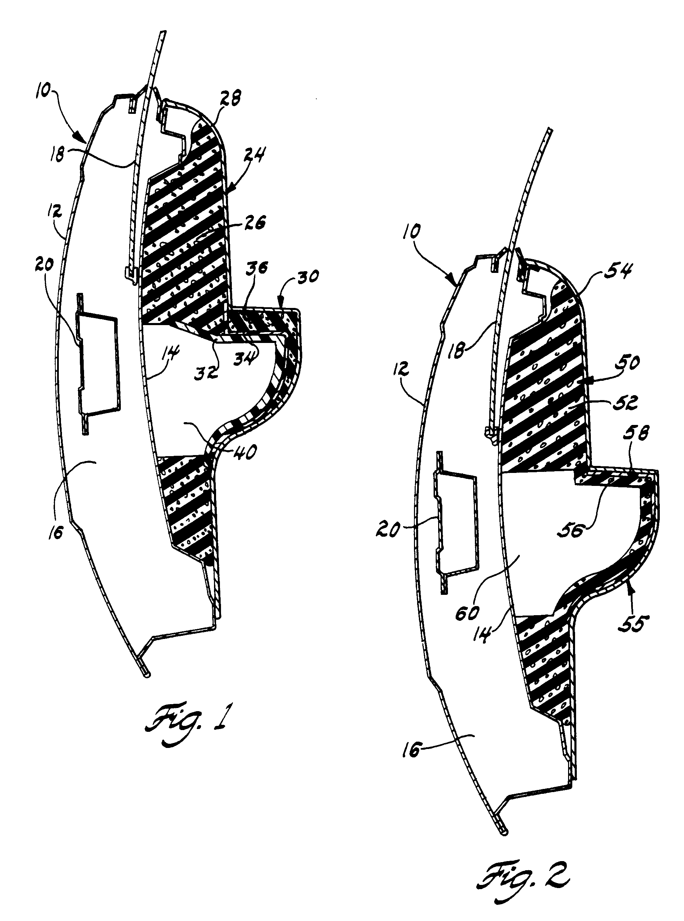

Referring to Figure 1, there is shown a section through a vehicle door 10. The door 10 includes an outer panel 12 and an inner panel 14 which are attached together in spaced-apart relation by welding and hem-flanging the peripheral edges thereof. A space 16 defined between the outer panel 12 and inner panel 14 provides a storage space for a window panel 18, and a window regulator, not shown, which raises and lowers the window panel 18. In addition, a guard beam 20 is situated in the space 16 and extends longitudinally between the front and rear of the door 10.

The outer surface of the inner panel 14 is concealed and padded by a door trim assembly generally indicated at 24. The door trim assembly 24 includes an energy-absorbing member 26 comprised of an energy-absorbing material, such as expanded polystyrene foam. The energy-absorbing member 26 is covered by a trim panel 28 which overlies the energy-absorbing member 26 and is formed of suitable material such as pressed hardboard or synthetic plastics. The trim panel 28 is in turn covered with a suitable decorative material such as vinyl, leather, cloth, or carpeting, not shown.

An armrest structure 30 is also provided on the door. As shown in Figure 1, the armrest 30 may be a foam plastics assembly moulded separate from the energy-absorbing member 26 and includes a substrate 32 of high-density foam, a moulded plastics cap 34 to provide additional strength and rigidity, and a low-density foam layer 36 to provide cushioning for the armrest assembly. The armrest 30 is attached to the energy-absorbing member 26 by adhesive or other suitable means. As seen in Figure 1, the energy-absorbing member 26 includes a cavity 40 which underlies the armrest 30.

It will be understood that the imposition of an occupant load imposed laterally against the armrest 30 will cause the armrest 30 to collapse into the cavity 40 as permitted by breaking, tearing or bending of the armrest assembly, including its substrate 32, cap 34, and cushion 36.

As seen in Figure 1, it is desirable that the depth of the cavity 40 defined within the energy-absorbing member 26 be substantially equal to the distance by which the arm-rest 30 projects laterally from the energy-absorbing member 26 into a passenger compartment of a vehicle to which the vehicle door 10 is attached. Accordingly, when the armrest 30 is collapsed laterally outwards into the cavity 40, the armrest 30 assumes a substantially flush relation with the inside surface of the door.

Figure 2 shows a second embodiment of the invention in which the outer panel 12, inner panel 14, space 16, window 18 and guard beam 20 are identical with those of Figure 1. A door trim assembly generally indicated at 50 includes an energy-absorbing member 52 covered by trim panel 54. An armrest 55 includes an integrally-moulded armrest portion 56 of the energy-absorbing member 52 which is also of foam and which may be either of the same density as the main body of the energy-absorbing member 52 or the arm-rest portion 56 may be a higher density foam for increased rigidity. A thermoplastics cover 58 is bonded to the armrest portion 56 to add rigidity. Upon imposition of a lateral force against the armrest, the armrest portion 56 of the energy-absorbing member 52 and the cap 58 yield inwardly enabling the armrest to collapse within a cavity 60 provided in the energy-absorbing member 52.

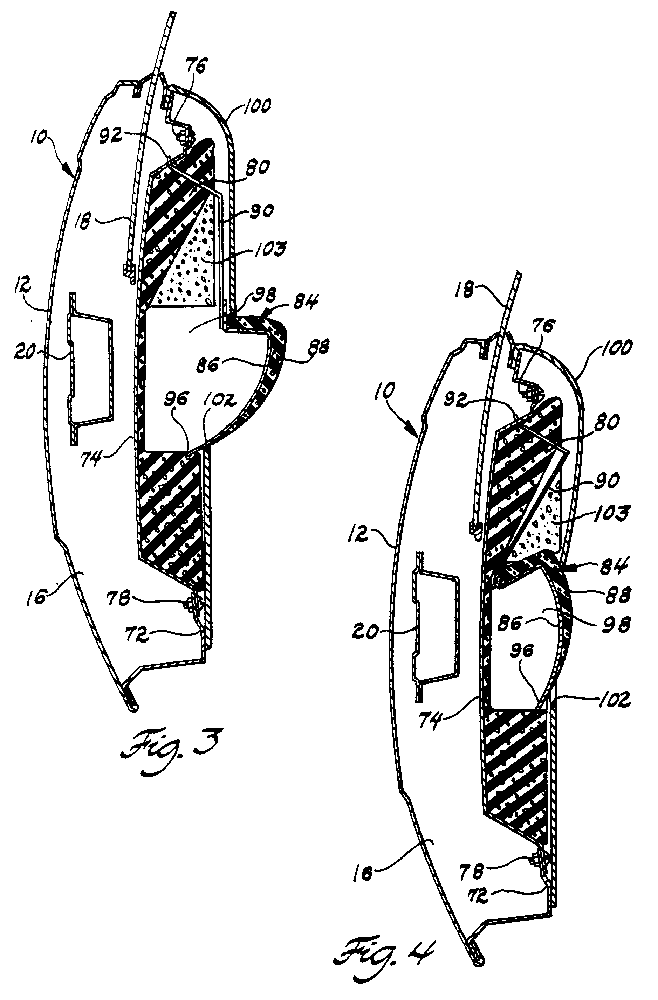

Figures 3 and 4 show a third embodiment of the invention which has those elements which are common to the first and second embodiments designated by like numerals. The door inner panel 72 includes a large cutout which receives a support panel 74 of sheet-metal which is adapted for attachment to the inner panel 72 by nut and bolt assemblies 76 and 78. An energy-absorbing member 80, shown as moulded foam, may be moulded in situ in the support panel 74. An armrest structure generally indicated at 84 includes a sheet-metal substrate 86 covered by a moulded foam cushion 88. A plurality of hanger straps, one of which is shown at 90, includes an upper end 92 which extends through an aperture in the support panel 74 and through the energy-absorbing member 80. The lower edge of the sheet metal substrate 86 includes a flanged tab 96 which seats in the energy-absorbing member 80 at a lower part of a cavity 98. A door trim panel 100 overlies the energy-absorbing member 80 and has a central opening 102 which fits around the arm-rest structure 84.

As best seen in Figure 4, the imposition of a lateral force against the arm-rest assembly 84 causes the armrest assembly to pivot inwardly into the cavity 98 about the tab 96 at the lower end thereof as permitted by the yielding of the hanger straps 90. In order to permit the yielding movement of the hanger straps 90, the energy-absorbing member 80 is moulded with integral clearance slots 103 which align with the hanger straps 90 to permit such a movement of the hanger straps. As seen in Figure 4, the armrest assembly 84 travels laterally inwards to assume a generally planar relationship with the trim panel 100 so that the door presents a substantially planar surface facing towards a seated occupant adjacent the door.

Thus it is seen that the invention provides a new and improved vehicle door trim assembly with an arm rest which is yieldably mounted on the door for collapse into a cavity provided in an energy-absorbing member underlying the door trim panel.

It will be understood that, although the energy-absorbing member as shown in the drawings is comprised of a moulded foam structure, it would be possible to employ alternative energy-absorbing materials and constructions, such as a honeycomb plastics or metal material having a suitable cavity therein for enabling the collapsing movement of the armrest. Furthermore, it will be understood that the particular armrest constructions and the mountings of the armrest shown in the drawings are only illustrative of preferred arrangements, construction and materials for the present invention.

## Claims

1. A vehicle door structure comprising: a door (10) including an outer panel (12) and an inner panel (14;74) attached together and defining a cavity (16) therebetween; and a door trim assembly (24;50) mounted on the inner panel (14;74) and including a trim panel (28;54;100) and an armrest (30;55;84) supported by mounting means (32,34;56,58;86,90) yieldable upon imposition of a lateral force to collapse and absorb energy, said trim panel (28;54;100) having an energy-absorbing member (26;52;80) which underlies and supports the door trim assembly (24;50) and defines the periphery of a space (40;60;98) between the inner panel (14;74) and the trim panel (28;54;100), said means (32,34;56,58;86,90) mounting said armrest (30;55;84) in overlying relationship with said space (40;60;98),
characterized in that
the depth of the space (40) defined within said energy-absorbing member (26;52;80) is substantially equal to the distance by which the armrest (30) projects laterally from said energy-absorbing member (26;52;80) into the passenger compartment of the vehicle, so that upon imposition of a predetermined lateral force the armrest (30;55;84) collapses into said space (40) to a position substantially flush with the surface of the door trim panel.

2. A vehicle door structure according to claim 1, in which the first energy-absorbing structure (26;52;80) is a moulded energy-absorbing foam (26;52;80) mounted on and overlying the inner panel (14;74).

3. A vehicle door structure according to claim 2, in which the energy-absorbing foam (52) has the armrest (55) carried thereon, and said trim panel (54) has an armrest portion (58) overlying the armrest (55).

4. A vehicle door structure according to claim 3, in which the energy-absorbing foam (52) is a moulded foam member of relatively low density and a portion thereof provides an integral armrest (56) of a higher density to provide a more substantial structural rigidity for the armrest (55) compared to the remainder of the energy-absorbing foam (52).

5. A vehicle door structure according to claim 2, in which the armrest (30) is attached to the energy-absorbing foam (26) and comprises a substrate (32) of high-density foam, a moulded plastics cap (34) and a low-density foam layer (36).

6. A vehicle door structure according to claim 1, in which the mounting means for the armrest (84) includes at least one hanger strap (90) having one end attached to the armrest (84) and the other end (92) attached to the inner panel (74) to suspend and support the armrest (84); there is an energy-absorbing member (80) mounted on and overlying the inner panel (74) and having said cavity (98) formed therein underlying the armrest (84); the trim panel (100) overlies the energy-absorbing member (80); and said energy-absorbing member (80) has a clearance space (103) formed therein to permit the hanger strap (90) to yield laterally towards the inner panel (74) upon laterally inward yielding movement of the armrest (84) upon the imposition of said predetermined level of lateral force thereagainst, so that the armrest (84) is yieldably received in the cavity (98) underlying the armrest (84).

## Patentansprüche

1. Fahrzeugtürstruktur bestehend aus: einer Tür (10), die eine äußere Verkleidung (12) und eine innere Verkleidung (14; 74) aufweist, die zusammengefügt sind und zwischenliegend einen Hohlraum (16) festlegen; und einer Tür-Zierbaugruppe (24; 50), die an der inneren Verkleidung (14; 74) befestigt ist und eine Zierverkleidung (28; 54; 100) und eine Armlehne (30; 55; 84) aufweist, die von Befestigungsmittel (32, 34; 56, 58, 86, 90) getragen ist, welche bei Abgabe einer seitlichen Kraft nachgiebig sind um zusammenzubrechen und Energie zu absorbieren, wobei die Zierverkleidung (28; 54; 100) ein energieabsorbierendes Element (26; 52; 80) aufweist, das unterhalb der Tür-Zierbaugruppe (24; 50) liegt und diese trägt und den Umfangsbereich eines Raumes (40; 60; 98) zwischen der inneren Verkleidung (14; 74) und der Zierverkleidung (28; 54; 100) festgelegt, wobei die Mittel (32, 34; 56, 58; 86, 90) die Armlehne (30; 55; 84) in Beziehung zu dem Raum (40; 60; 98) obenliegend befestigen,
dadurch **gekennzeichnet,**
daß die Tiefe des innerhalb des energieabsorbierenden Elementes (26; 52; 80) definierten Raumes (40) im wesentlichen gleich dem Abstand ist, mit dem die Armlehne (30) von dem energieabsorbierenden Element (26; 52; 80) seitlich in die Passagierkabine des Fahrzeuges hervorsteht, so daß bei Abgabe einer vorbestimmten seitlichen Kraft die Armlehne (30; 55; 84) in den Raum (40) in eine im wesentlichen zu der Oberfläche der Tür-Zierverkleidung ebene Position zusammenbricht.

2. Fahrzeugtürstruktur nach Anspruch 1,
bei der die erste energieabsorbierende Struktur (26; 52; 80) ein auf und oberhalb der inneren Verkleidung (14; 74) liegend befestigter energieabsorbierender Schaum (26; 52; 80) ist.

3. Fahrzeugtürstruktur nach Anspruch 2,
bei der der energieabsorbierende Schaum (52) die Armlehne (55) trägt und wobei die Zierverkleidung (54) einen oberhalb der Armlehne (55) liegenden Armlehnenabschnitt (58) besitzt.

4. Fahrzeugtürstruktur nach Anspruch 3,
bei der der energieabsorbierende Schaum (52) ein geformtes Schaumelement von relativ geringer Dichte ist und ein Teil davon eine integrale Armlehne (56) von höherer Dichte bildet, um eine stärkere strukturelle Steifigkeit der Armlehne (55) im Vergleich zu dem Rest des energieabsorbierenden Schaumes (52) zu bilden.

5. Fahrzeugtürstruktur nach Anspruch 2,
bei der die Armlehne (30) an dem energieabsorbierenden Schaum (26) angebracht ist und ein Substrat (32) eines Schaumes hoher Dichte, eine geformte Kunststoffkappe (34) und eine Schaumschicht (36) niederer Dichte umfaßt.

6. Fahrzeugtürstruktur nach Anspruch 1,
bei der die Befestigungsmittel für die Armlehne (84) wenigstens ein Aufhängeband (90) umfaßt, dessen eines Ende an der Armlehne (84) befestigt ist und dessen anderes Ende (92) zur Aufhängung und Halterung der Armlehne (84) an der inneren Verkleidung (74) befestigt ist; wobei ein energieabsorbierendes Element (80) auf und überliegend der inneren Verkleidung (74) befestigt ist und den darin ausgebildeten, unterhalb der Armlehne (84) liegenden Hohlraum (98) aufweist, wobei die Zierverkleidung (100) oberhalb des energieabsorbierenden Elementes (80) liegt; und wobei das energieabsorbierende Element (80) einen darin ausgebildeten Zwischenraum (103) aufweist, um zu ermöglichen, daß das Aufhängeband (90) bei einer seitlich nach innen gerichteten nachgiebigen Bewegung der Armlehne (84) aufgrund der dagegenwirkenden Abgabe der vorbestimmten Höhe der Seitenkraft seitlich zur inneren Verkleidung (74) nachgibt, so daS die Armlehne (84) nachgiebig in dem unterhalb der Armlehne (84) liegenden Hohlraum (98) aufgenommen wird.

## Revendications

1. Structure de porte de véhicule comprenant : une porte (10) qui possède un panneau extérieur (12) et un panneau intérieur (14 ; 74) fixés l'un à l'autre et définissant entre eux une cavité (16), et un ensemble (24 ; 50) de garnissage de porte, monté sur le panneau inférieur (14 ; 74) et comprenant un panneau de garnissage (28 ; 54 ; 100) et un accoudoir (30 ; 55 ; 84) supporté par des moyens de montage (32, 34, 56, 58 ; 86, 90) capables de céder en réponse à l'application d'une force latérale, pour s'escamoter et absorber de l'énergie où ce panneau de garnissage (28 ; 54 ; 100) a un élément absorbeur d'énergie (26 ; 52 ; 80) qui est situé sous l'ensemble (24, 50) de garnissage de porte et définit la périphérie d'un espace (40 ; 60 ; 90) compris entre le panneau intérieur (14 ; 74) et le panneau de garnissage (28 ; 54 ; 100), et où ces moyens (32, 34 ; 56, 58 ; 86, 90) portent cet accoudoir (30 ; 55 ; 84) dans une position qui recouvre cet espace (40 ; 60 ; 98), cette structure de porte étant caractérisée en ce que la profondeur de l'espace (40) défini dans cet élément absorbeur d'énergie (26 ; 52 ; 80) est pratiquement égal à la distance dont l'accoudoir (30) fait saillie latéralement sur cet élément absorbeur d'énergie (26 ; 52 ; 80) dans l'habitacle du véhicule, de sorte qu'en réponse à l'application d'une force latérale prédéterminée, l'accoudoir (30 ; 55 ; 84) s'escamote dans cet espace (40) pour prendre une position pratiquement à l'affleurement de la surface du panneau de garnissage de porte.

2. Structure de porte de véhicule selon la revendication 1, dans laquelle la première structure absorbeuse d'énergie (26 ; 52 ; 80) est une mousse absorbeuse d'énergie moulée (26 ; 52 ; 80) montée sur le panneau intérieur (14 ; 74) et qui recouvre ce panneau.

3. Structure de porte de véhicule selon la revendication 2, dans laquelle la mousse absorbeuse d'énergie (52) porte l'accoudoir (55) et ce panneau de garnissage (54) possède une partie accoudoir (58) qui recouvre l'accoudoir (55).

4. Structure de porte de véhicule selon la revendication 3, dans laquelle la mousse absorbeuse d'énergie (52) est un élément en mousse moulée de densité relativement basse, et une partie de cet élément forme un accoudoir (56) venu de moulage, de plus forte densité, pour donner à l'accoudoir (55) une rigidité structurale plus grande, comparativement au reste de la mousse absorbeuse d'énergie (52).

5. Structure de porte de véhicule selon la revendication 2, dans laquelle l'accoudoir (30) est fixé à la mousse absorbeuse d'énergie (26) et comprend un substrat (32) en mousse de haute densité, un chapeau (34) en matière plastique moulée, et une couche (36) de mousse de basse densité.

6. Structure de porte de véhicule selon la revendication 1, dans laquelle les moyens de montage de l'accoudoir (84) comprennent au moins une suspente (90) dont une extrémité est fixée à l'accoudoir (84) et l'autre extrémité (92) est fixée au panneau intérieur (74) pour suspendre et supporter l'accoudoir (84), et comprend un élément absorbeur d'énergie (80) qui est monté sur le panneau intérieur (74) et le recouvre, et qui présente intérieurement cette cavité (98) située sous l'accoudoir (84) ; et où le panneau de garnissage (100) recouvre l'élément absorbeur d'énergie (80) ; et cet élément absorbeur d'énergie (80) possède un espace de dégagement (103) qui y est formé pour permettre à la suspente (90) de fléchir latéralement vers le panneau intérieur (74) en réponse à un mouvement de flexion de l'accoudoir (84) dirigé latéralement vers l'intérieur, qui se produit sous l'effet de l'application de cette force latérale d'intensité prédéterminée exercée sur cet accoudoir, de sorte que l'accoudoir (84) se loge en fléchissant dans la cavité (98) située sous l'accoudoir (84).
